# EUROPÄISCHE PATENTSCHRIFT

(11) **EP 2 218 619 B1**
(45) Veröffentlichungstag und Bekanntmachung des Hinweises auf die Patenterteilung: **17.04.2013**
(21) Anmeldenummer: 09016111.8
(22) Anmeldetag: 30.12.2009
(51) Int. Cl.: B60T 13/74, H02K 23/66, H02K 11/00, B60T 17/22, G01K 7/24, G01K 13/08, H02H 7/085, F16D 66/00

(54) **Verfahren zum Ermitteln der Betriebstemperatur eines Motors, insbesondere zum Betätigen eines Funktionselementes wie einer elektromotorischen Parkbremse in einem Fahrzeug, und zum Umpolen seines Motorstromes**
Method for determining the operating temperature of a motor, particularly for actuating a functional element such as a parking brake driven by an electric motor in a vehicle, and for reversing the polarity of its motor current
Procédé de détermination de la température de fonctionnement d'un moteur, notamment pour l'actionnement d'un élément de fonctionnement comme un frein de stationnement à moteur électrique dans un véhicule, et pour l'inversion des pôles de son courant de moteur

(30) Priorität: 07.02.2009 DE 102009007887
(43) Veröffentlichungstag der Anmeldung: 18.08.2010
(73) Patentinhaber: Oechsler Aktiengesellschaft, 91522 Ansbach (DE)
(72) Erfinder: Heinz, Jürgen, Dipl.-Ing., 91541 Rothenburg (DE)
(74) Vertreter: Führing, Dieter

(56) Entgegenhaltungen:
- DE-A1- 3 818 722
- DE-A1-102004 010 959
- DE-A1-102005 006 093
- DE-A1-102005 030 539
- DE-A1-102007 035 541
- DE-C2- 3 136 769

## Beschreibung

Aus der EP 1 855 927 B1 ist es bekannt, die Park- oder Feststellbremse etwa eines Personenkraftwagens mittels eines kleinbauenden hochtourigen Gleichstrom-Elektromotors mit permanentmagnetischem Statorfeld über ein Untersetzungsgetriebe zu betätigen, das eine Spindel verdreht. Dadurch wird deren Spindelmutter längsverfahren, um z.B. über ein Gestänge auf das Bremssystem einzuwirken. Wegen selbsthemmenden Gewindes der Spindel bleibt die Mutter bei abgeschaltetem Motor beispielsweise mit gerade zugespannter Bremse stehen, bis sie durch umgepolte Ansteuerung des Motors zum Lösen der Bremse wieder zurückbewegt wird.

In der Praxis hat es sich als wünschenswert erwiesen, solch eine elektromotorische Parkbremse mit möglichst konstantem Anzugs- oder Zuspannmoment zu betreiben, vgl. DE 10 2008 052 845 A1. Dazu wird der Motor abgeschaltet, sobald sein Strom im Zuge seiner Zuspannbelastung auf einen dem wünschenswerten Zuspannmoment entsprechenden, vorgegebenen Wert angestiegen ist. Wie dort ausgeführt, ist mit solcher Vorgabe allein eines Abschaltstromwertes das Erreichen stets gerade eines bestimmten Drehmomentes im Zuge des Zuspannens aber noch nicht sichergestellt, da die Abhängigkeit des Motorstromes vom Lastmoment ihrerseits wieder betriebsabhängig, nämlich insbesondere von der Motortemperatur abhängig ist. Weil diese Temperatur jedoch aus Aufwandsgründen nicht direkt gemessen werden kann, stützt man sich dort auf eine Berücksichtigung der bloßen Umgebungstemperatur des Motors in mathematischen Modellen über interne und externe Einflüsse auf die Motortemperatur; womit allerdings nur Grenzzustände des Motorbetriebes abgebildet werden.

Das trifft im Wesentlichen auch zu auf den Betrieb einer Feststellbremse mit von der Umgebungstemperatur möglichst unabhängiger Feststellkraft infolge Ermittlung der Stromaufnahme des elektromechanischen Aktuators nach DE 10 2007 35 541 A1. Dort wird der in aufeinaderfolgenden Zuspannphasen von unterschiedlichen Werten der Feststellkraft abhängige Aktuatorstrom an einem repräsentativen Aktuatormuster aufgenommen und in nicht näher offenbarter Weise zu einem dort so genannten Gesamtmodell verarbeitet, aus dem später, im realen Betrieb, in Abhängigkeit vom momentanen Aktuatorstrom die gerade angelegte Feststellkraft erkennbar sein soll. Dabei sollen auch Außentemperaturen und in nicht näher offenbarter Weise auch Rotortemperaturen im Gesamtmodell berücksichtigt werden, indem dessen Kenlinienschar unter verschiedenen äußeren Bedingungen aufgezeichnet werden. Die tatsächlich im Aktuatorbetrieb gerade auftretende Motortemperatur kann deshalb aus einem derart einmal anhand eines Musters erstellten Modell nicht abgelesen werden.

Auch andere Einsatzfälle von Kommutator-Gleichstrommotoren im Fahrzeug- oder im Anlagenbetrieb bedingen definierte und deshalb temperaturunabhängige Abschaltmomente, also eine von der Motortemperatur abhängige Vorgabe des maximalen Motorsstromes.

Bei der erfindungsgemäßen Lösung für eine temperaturabhängige Vorgabe eines maximalen Motorstromes zum Erreichen eines temperaturunabhängigen Abschaltmomentes ist von der Überlegung ausgegangen, dass eine Bestimmung der tatsächlichen Motortemperatur grundsätzlich über eine Messung des ohmschen Widerstandes seiner kupfernen Rotorwicklungen möglich ist, da deren materialbedingter Temperaturkoeffizient und deren Widerstand bei einer Referenztemperatur bekannt sind. Solch eine Widerstandsmessung ist aber bei einem kommutierenden Gleichstrommotor nicht sinnvoll, weil nicht bekannt ist, welche der Rotorspulen im Augenblick der Widerstandsmessung je nach der momentanen Kommutatorwinkelstellung gerade in Serie und parallel zueinander geschaltet sind.

Deshalb wird im Rahmen vorliegender Erfindung zur Bestimmung der aktuellen Motortemperatur ein stark temperaturabhängiger Leiter am oder im Motor, möglichst in Nachbarschaft zum Rotor, positioniert, wie es etwa aus der JP 2 003 322 182 A für den Einsatz von Temperatursensoren bei Motoren als solches bekannt ist. Solch ein separater Temperatursensor bedarf aber des herstellungs- und montagetechnischen Zusatzaufwandes von mindestens einer gesonderten Leitung samt Anschlußstecker zur Abfrage des Sensors in einer Auswerte- und Steuerschaltung, was insbesondere angesichts der extrem niedrigen dem Automotive-Zulieferer zugestandener Preispunkte wirtschaftlich schwer zu realisieren ist.

Insoweit die identischen Verhältnisse liegen vor beim Schutz des Lüftermotors einer Brennkraftmaschine gegen elektrische Motorüberlastung aufgrund mechanischer Lüfterblockade nach DE 10 2004 010 959 A1, wo das Problem besteht, dass eine überlastbedingte Motorerwärmung zu einem Ansteigen des Motorwiderstandes und infolgedessen zu einem Absinken des Motorstromes unter die Ansprechschwelle einer mit dem Motor in Serie geschalteten Überstromsicherung führt. Zum Abschalten des blockierten Motors wird diesem deshalb ein Schaltelement, bei dem es sich um einen temperaturabhängigen Widerstand handeln kann, etwa auf der Bürstenplatte den Motor thermisch kontaktierend wiederum dreipolig zugeschaltet.

Es gilt daher, durch vorliegende Erfindung die allgemeine Aufgabe zu lösen, eine Temperaturmessung in der Nähe des Rotors eines kommutierenden Gleichstrommotors möglichst ohne Bedarf an zusätzlichen Leitungen zu ermöglichen; etwa zum Erzielen einer besseren Konstanz des Zuspannmomentes beim Betätigen einer elektromotorischen Parkbremse durch Speisen ihres Gleichstrommotors bis zum Ansteigen des Motorstromes auf einen, gemäß einem gewünschten Zuspannmoment am Rotor vorgegebenen, Abschaltstrom; wofür von Zeit zu Zeit die tatsächliche Arbeitstemperatur des Motors in möglichst guter Annäherung zu ermitteln und in Abhängigkeit davon der Abschaltwert des Motorstromes zu variieren ist, insbesondere bei tieferen Temperaturen heraufzusetzen ist.

Diese Aufgabe ist gemäß den Merkmalen des Anspruches 1 dadurch gelöst, dass den Rotorspulen am Kommutator als Temperatursensor ein Thermistor oder dergleichen stark temperaturabhängiger elektrischer Leiter parallelgeschaltet wird, über den bei Rotorstillstand kurzzeitig ein Meßstrom fließt. Dazu wird während einer der überwiegenden Stillstandsphasen des Motors, während z.B. eine Bremse momentan weder weiter zugespannt noch wieder gelöst wird, in der dann zufällig gegebenen Kommutatorstellung nur ganz kurzzeitig Betriebsspannung aufgeschaltet. Der Meßstrom ist ein Maß für die Motortemperatur.

So ist mit minimalem zusätzlichem Bauteileaufwand innerhalb weniger Millisekunden die Temperaturbestimmung im momentan stillstehenden Gleichstrommotor über seinen Kommutator-Anschluß, also ohne zusätzliche Sensorleitungen möglich.

Vorzugsweise liegt der Temperatursensor in Serie mit einer Diode oder dergleichen Richtleiter; dann wird unmittelbar darauf, also noch in derselben Kommutatorstellung, die Motorspannung erneut kurzzeitig aber nun umgepolt aufgeschaltet. Bei gegebener Motorspannung mit Polung in Durchlassrichtung der Diode bestimmt sich der kurzzeitige Meßstromfluss nach der Summe der einander parallelgeschalteten Leitwerte (also der reziproken Widerstände) des Thermistors und der Rotorspulen in ihrer momentanen Schaltungskonfiguration über den Kommutator; während bei umgekehrter Polarität, wegen nun sperrender Diode im Parallelzweig, allein der Leitwert der Rotorspulen in noch derselben Schaltungskonfiguration der Rotorspulen (Kommutatorstellung) den kurzzeitigen Meßstromfluss bestimmt. Die Differenz dieser beiden Strommesswerte entspricht dem von der Momentantemperatur abhängigen Leitwert des Thermistors, aus dessen bekannter Typenkennlinie, nämlich des Leitwertes über der Temperatur, sich die Momentantemperatur ergibt.

Der Einbau des Thermistors mit seiner Diode beeinflusst das Betriebsverhalten des Motors nicht. Das Ergebnis dieser Temperaturbestimmung ist unabhängig von der Länge der Motorspeiseleitung zum Kommutator und der Übergangswiderstände ihrer Steckkontakte, weshalb eine Systemeichung für die Temperaturermittlung nicht erforderlich ist. Die Stromdifferenzmessung kann, wie die Ermittlung des Stromanstieges auf seinen Abschaltwert, über den Spannungsabfall an einem Widerstand in der Motorspeiseleitung erfolgen, der darin in der Regel ohnehin zur Begrenzung eines etwaigen Kurzschlußstromes vorhanden ist.

Für das Umpolen des Stromflusses über den Kommutator - und damit im Betrieb über die Rotorspulen zur Drehrichtungsumkehr - wird üblicherweise eine Transistorwendeschaltung eingesetzt. Mit dieser erfolgt nun auch das Umpolen des Widerstands-Meßstromes. Allerdings benötigt der Aufbau einer solchen Wendeschaltung vier Schalttransistoren in ihren Brückendiagonalen, und in der Regel zur Verpolungssicherung einen weiteren Transistor in der Zuleitung. Eine derartige Temperaturbestimmung ist auch aus der US 4.721.894 A1 bekannt. Es wird deshalb angestrebt, diesen Schaltungsaufwand, der die Marge des Automotive-Zulieferers drückt, ohne Einbuße an Funktionszuverlässigkeit zu verringern.

Die Lösung dieser zusätzlichen Aufgabe sieht gemäß den Merkmalen des Anspruches 6, dem auch eigenständiger Schutz zukommt, vor, die Wendeschaltung mittels eines zweipoligen Umschaltrelais zu realisieren. Kleinbauende automotive-spezifizierte Relais sind preiswert verfügbar, da sie etwa in Kraftfahrzeugtüren vielfältig zum Einsatz kommen. Allerdings sind sie nur zum Umschalten von Signalpfaden ausgelegt, nicht zum Schalten von - gar induktiven - Lasten. Deshalb wird, in Weiterbildung vorliegender Erfindung, die Brückenzuleitung statt des bloßen Verpolungsschutzes mit einem Schalttransistor versehen, der kurz vor dem Umschalten der damit in Serie liegenden Relaiskontakte vorübergehend hochohmig gesteuert wird. Dadurch ist sichergestellt, dass die Relaiskontakte praktisch nicht belastet werden, da sie zum Wechsel der Rotor-Drehrichtung ebenso wie zur Umkehr des Temperatur-Meßstromes stromlos umschalten.

Zusätzliche Alternativen und Weiterbildungen der Erfindung ergeben sich aus den weiteren Ansprüchen und, auch hinsichtlich deren Vorteilen, aus nachstehender Beschreibung eines auf das Funktionswesentliche abstrahiert und nicht maßstabsgerecht skizzierten Funktions- und Schaltbildes über eine im Interesse konstanten Zuspannmomentes etwa einer elektromotorisch betätigten Feststellbremse temperaturabhängige Variation des Abschaltwertes des Motorstromes.

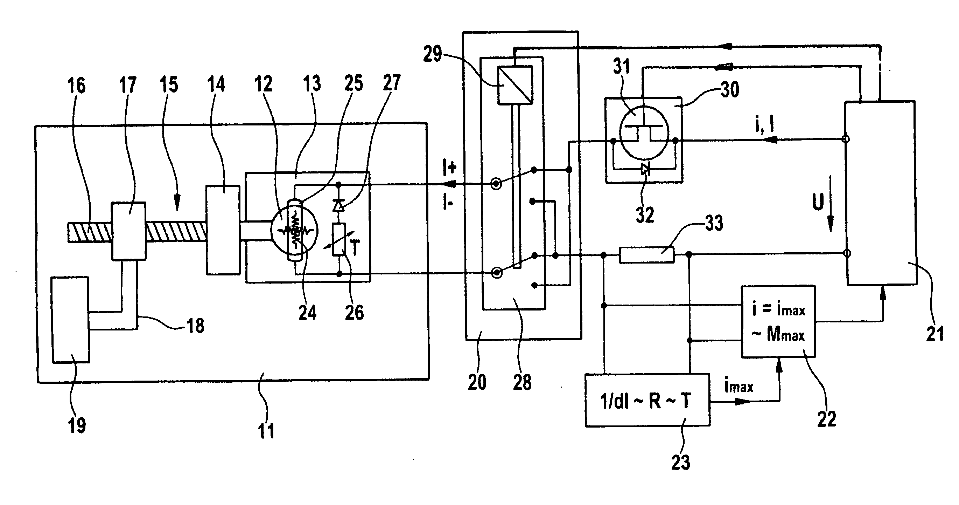

Bei der in der einzigen Figur der Zeichnung beispielhaft skizzierten elektromotorischen Parkbremse 11 verdreht der Rotor 12 eines hochtourigen Gleichstrommotors 13 über ein Untersetzungsgetriebe 14 eine Spindel 15 und verlagert dadurch auf ihrem selbsthemmend ausgelegten Gewinde 16 eine Mutter 17. Über ein Gestänge 18 wird dadurch das Bremssystem 19 insbesondere eines Kraftfahrzeuges zugespannt, bis beim Motor 13 an seinem Rotor 12 ein vorbestimmtes Zuspann-Lastmoment Mmax erreicht ist. Dann wird der Motor 13 abgeschaltet und bei somit nun stillstehender Spindel 15 die Bremswirkung von der Stellung der Mutter 17 längs der Spindel 15 aufrechterhalten. Zum Lösen des Bremssystemes 19 erfolgt über eine Wendeschaltung 20 eine Umkehr der Drehrichtung des Rotors 12 zum Zurückfahren der Spindel-Mutter 17.

Das Abschalten der Motorstromes i mittels einer Steuerschaltung 21 bei Erreichen des vorgegebenen Zuspannmomentes Mmax wird von einer Lastmeßschaltung 22 für den Motorstrom i bei dessen Anstieg auf eine entsprechend vorgegebenen Maximalwert imax ausgelöst. Allerdings ist das vom Motor 13 abgegebene Drehmoment M nicht nur vom Motorstrom i abhängig, sondern auch stark von der Betriebstemperatur des Motors 13. Die lastabhängige Vorgabe des Abschaltstromes imax wird deshalb aus einer Temperaturmeßschaltung 23 modifiziert.

Deren Funktion basiert auf einer Widerstandsbestimmung über eine Strommessung bei bekannter Klemmenspannung U an einem elektrischen Leiter mit temperaturabhängigem Widerstand. Der Leiter kann durch die Rotorspulen 24 gegeben sein. Allerdings hängt es von der Momentanstellung des Rotors 12 relativ zum Kommutator 25 für das Umschalten der Speisung der Rotorspulen 24 ab, welche nicht bekannte Serien- und Parallelschaltung der Rotorspulen 24 momentan gerade wirksam ist. Deshalb ist eine Temperaturbestimmung mittels einer Strommessung über den Kommutator 25 so nicht ohne weiteres realisierbar.

Stattdessen wird, die vorliegende Erfindung weiterbildend, zur Bestimmung der Betriebstemperatur des Motors 13, ohne dafür eine separate Messleitung zum Motor 13 zu benötigen, dem Kommutator 25 und somit den Rotorspulen 24 ein stark temperaturabhängiger Leiter 26, vorzugsweise in Form eines Thermistors, in Serie mit einem Richtleiter 27, vorzugsweise in Form einer Diode, parallelgeschaltet.

Die Temperaturbestimmung erfolgt in einer Ruhephase des Antriebs der Parkbremse 11, während also der Motor 13 nicht gerade die Spindel 15 verdreht, sondern stillsteht. Jetzt wird der Motor 13 - z.B. zunächst in Sperr-Richtung des Richtleiters 27 - so kurzzeitig bestromt (I+), dass er sich noch nicht in Bewegung setzt. Sodann wird mittels der Wendeschaltung 20 bei gleicher Klemmenspannung U ein umgepolter kurzzeitiger Rotorstrom (I-) aufgeschaltet, so dass nun der temperaturabhängige Leiter 26 (Thermistor) über den Richtleiter 27 (Diode) dem Kommutator 25 parallelgeschaltet ist - nämlich, wegen noch stillstehenden Rotors 12, bei noch unveränderter Verschaltungssituation der Rotorspulen 24 über dem Kommutator 25. Infolge der Parallelschaltung der Leitwerte G ist nun der resultierende Strom I- größer als der reine Spulenstrom I+. Die Stromdifferenz dI ist deshalb der Stromanteil, der über den Thermistor 26 fließt. Mit der bekannten Klemmenspannung U ergibt sich daraus der von der momentanen Umgebungstemperatur T abhängige Widerstand R und aus der bekannten Spezifikation des Thermistors 26, die etwa als Tabelle in der Temperaturmeßschaltung 23 hinterlegt ist, die momentane Betriebstemperatur T des Motors 13 - gemessen in der Nähe des für das Drehmoment M verantwortlichen Rotor-Magnetfeldes, ohne dafür eine gesonderte Leitung aus dem Motor 13 herausführen zu müssen.

Die Strommessungen zum Bestimmen des momentanen, temperaturabhängigen Thermistorwiderstandes R bei Motorstillstand können, ebenso wie das Feststellen des Motorstrom-Abschaltwertes imax bei Motorbetrieb, über die Spannungsabfälle längs eines Widerstandes 33 in der Motorspeiseleitung erfolgen. Da der Widerstand 33 dort ohnehin zum Begrenzen von etwaigen Kurzschlußströmen vorhanden ist, bedarf es auch diesbezüglich keines besonderen zusätzlichen Aufwandes für die Strommessung.

Weil die Wendeschaltung 20 den Motorstrom nicht mehr nur zum Umsteuern der Bremswirkung umkehren muß, sondern nun auch zu den wiederholten sehr kurzzeitigen Stromdifferenzmessungen dI für die Temperaturbestimmungen T zum Anpassen des Abschaltstromes imax an die Betriebsgegebenheiten, wird sie jetzt stärker beansprucht. Um dementsprechend teure Brückenschalttransistoren einzusparen, wird die Wendeschaltung 20 gemäß einer zusätzlichen Weiterbildung der Erfindung vorzugsweise wie skizziert mittels eines zweipoligen Umschaltrelais 28 realisiert. Um dessen Kontakte durch stromloses Schalten zu entlasten, wird spätestens unmittelbar vor einem Ansteuern der Erregerspule 29 des Relais 28 aus der Motorsteuerung 21 auch eine Schaltstrecke 30 in der Zuleitung zur Wendeschaltung 20 geöffnet. Dadurch ist beim Umschalten des Relais 28 sichergestellt, dass über dessen Kontakte momentan weder ein Motorstrom i noch auch nur ein Meßstrom I fließt, dass das Umschalten also stromlos erfolgt.

Wie skizziert wird als Schaltstrecke bevorzugt ein wie das Relais 28 aus der Motorsteuerung 21 angesteuerter Feldeffekt-Schalttransistor 31 eingesetzt. Gegen Überlastung durch die gegensinnigen Lenzschen Abschalt-Induktionsströme ist er von einer Freilaufdiode 32 überbrückt.

Um also, z.B. bei einer elektromotorischen Parkbremse 11, stets ein gleiches Zuspannmoment Mmax wirksam werden zu lassen, wird der Abschaltwert imax des Motorstromes i in Abhängigkeit von der Betriebstemperatur T des Motors 13 variiert. Dabei wird erfindungsgemäß zur Ermittlung der Betriebstemperatur T eines kommutierenden Gleichstrommotors 13 über einen nahe seinem Rotor 12 angeordneten Sensor, ohne zusätzlicher Leitungen für die Sensorabfrage zu bedürfen, zweckmäßigerweise dem Kommutator 25 für die Rotorspulen 24 ein Thermistor 26 in Serie mit einer Diode 27 bekannter Kennlinie parallelgeschaltet und während vorübergehenden Rotorstillstandes die Stromdifferenz dI aus wechselnden Meßstrom-Polaritäten I+, I- als der Thermistorstrom bestimmt. Für den ergibt sich bei vorgegebener Motor-Klemmenspannung U aus der Thermistor-Kennlinie die Umgebungstemperatur T. Um dabei für eine Polaritätsumkehr der Ströme i, I über den Kommutator 25 des Gleichstrommotors 13 keine Transistorbrücke Gleichstrommotors 13 keine Transistorbrücke zu benötigen, dient ein zweipoliges Umschaltrelais 28 als Wendeschaltung 20, die stromlos umschaltet, indem ein mit ihren Kontakten in Serie liegender Schalttransistor 31 spätestens gleichzeitig mit der Relais-Erregerspule 29 zum Öffnen des Motorstromweges angesteuert wird.

### Bezugszeichenliste

- 11: Parkbremse
- 12: Rotor (von 13)
- 13: Gleichstrommotor
- 14: Untersetzungsgetriebe (hinter 13)
- 15: Spindel (hinter 14)
- 16: selbsthemmendes Gewinde (auf 15)
- 17: Mutter (auf 16)
- 18: Gestänge (von 17 nach 19)
- 19: Bremssystem
- 20: Wendeschaltung (vor 13)
- 21: Motor-Steuerschaltung (für den Stromfluss i bzw. I durch 24)
- 22: Lastmeßschaltung (über i)
- 23: Temperaturmeßschaltung (über dI)
- 24: Rotorspulen (von 12)
- 25: Kommutator (für 24)
- 26: temperaturabhängiger Leiter (mit 27 parallel zu 24)
- 27: Richtleiter (in Serie zu 26)
- 28: Umschaltrelais (als 20
- 29: Erregerspule (von 29)
- 30: Schaltstrecke (vor 20)
- 31: Schalttransistor (in 30)
- 32: Freilaufdiode (parallel zu 31)
- 33: Kurzschluss-Schutzwiderstand für den Motorstrom (i)
- U: Klemmen- oder Betriebsspannung des Motors (13)
- I; 1+, I-Messströme: über den Kommutator (25) zur Temperaturbestimmung
- T: Betriebstemperatur des Motors (13) nahe seinem Rotor (12)
- G: Leitwert der Rotorspulen (24) in einer momentanen Stellung des Kommutators
- R: temperturabhängiger Widerstandswert des Thermistors (26)
- i: beim Zuspannen anwachsender Motorstrom
- imax: Abschaltwert des Motorstromes gemäß vorgegebenem Lastmoment
- M: Lastmoment an der Motorausgangswelle
- Mmax: vorgegebenes Abschaltmoment

## Patentansprüche

1. Verfahren zum Ermitteln der Betriebstemperatur (T) eines Motors, insbesondere eines Motors zum Betätigen eines Funktionselementes wie einer elektromotorischen Parkbremse (11) in einem Fahrzeug, bei Speisen des Motors bis zum Ansteigen seines Motorstromes (i) auf einen, gemäß einem gewünschten Lastmoment (Mmax) am Rotor (12) vorgegebenen und betriebstemperaturabhängig veränderbaren, Abschaltstrom (imax), indem die Betriebstemperatur (T) eines Kommutator-Gleichstrommotors (13) bei Stillstand seines Rotors (12) während einer Motor-Stillstandsphase aus einem kurzzeitigen Mess-Strom (I) durch einen am Kommutator (25) des Motors dessen Rotorspulen (24) parallelgeschalteten temperaturabhängigen Leiter (26) bestimmt wird, wofür dem momentan stillstehenden Motor derart kurzzeitig Motor-Betriebsspannung (U) aufgeschaltet wird, dass er sich noch nicht in Bewegung setzt.

2. Verfahren nach dem vorangehenden Anspruch, **dadurch gekennzeichnet, dass** der Mess-Strom (I) während der Kommutatorstellung dieser Stillstandsphase abwechselnd entweder über Rotorspulen (24) samt dem ihnen parallelgeschalteten temperaturabhängigen Leiter (26) als resultierender Strom (I-) oder aber nur über Rotorspulen (24) als reiner Spulenstrom (I+) gemessen und der aktuelle, temperaturabhängige Widerstandswert (R) des Leiters (26) bei der in der Stillstandsphase kurzzeitig aufgeschalteten Motor-Klemmenspannung (U) aus der Stromdifferenz (dI) zwischen dem resultierenden Strom (I-) und dem reinen Spulenstrom (I+) bestimmt wird.

3. Verfahren nach einem der beiden vorangehenden Ansprüche, **dadurch gekennzeichnet, dass** der Mess-Strom (I) mit wechselnden Polaritäten auf den Kommutator (25) mit ihm polaritätsabhängig parallelgeschaltetem temperaturabhängigem Leiter (26) gegeben wird.

4. Verfahren nach einem der drei vorangehenden Ansprüche, **dadurch gekennzeichnet, dass** dem Kommutator (25) eine Reihenschaltung aus temperaturabhängigem Leiter (26) und Richtleiter (27) parallelgeschaltet und der Mess-Strom (I; I+/I-) umgepolt wird.

5. Verfahren nach einem der vier vorangehenden Ansprüche, **dadurch gekennzeichnet, dass** der Meßstrom (I) aus seinem Spannungsabfall über einem Kurzschluss-Schutzwiderstand (33) für den Motorstrom (i) bestimmt wird.

6. Verfahren nach Anspruch 1, **dadurch gekennzeichnet, dass** eine Polaritätsumkehr der Motor- und der Meßströme (i; I) bei abgeschalteten Strömen (i; I) über ein zweipoliges Umschaltrelais (28) erfolgt.

7. Verfahren nach dem vorangehenden Anspruch, **dadurch gekennzeichnet, dass** ein mit den Relais-Schaltkontakten in Serie liegender Schalttransistor (31) früher als das Umschaltrelais (28) angesteuert wird.

## Claims

1. Method for determining the operating temperature (T) of a motor, in particular of a motor for operating a functional element such as an electromotive parking brake (11) in a vehicle, with the motor being fed until its motor current (i) rises to a switch-off current (imax), which is predefined in accordance with a desired load torque (Mmax) on the rotor (12) and can be varied depending on the operating temperature, by the operating temperature (T) of a commutator DC motor (13) being determined from a brief measurement current (I) through a temperature-dependent conductor (26) on the commutator (25) of the motor, which conductor is connected in parallel with the rotor coils (24) of the said motor, during a stationary phase of the motor when the rotor (12) of the said commutator DC motor is stationary, for which purpose a brief motor operating voltage (U) is applied to the currently stationary motor in such a way that it does not yet start to move.

2. Method according to the preceding claim, **characterized in that** the measurement current (I) is measured in the commutator position of this stationary phase alternately either across rotor coils (24) together with the temperature-dependent conductor (26), which is connected in parallel with the said rotor coils, as a resulting current (I-) or else only across rotor coils (24) as a pure coil current (I+), and the current, temperature-dependent resistance value (R) of the conductor (26) at the motor terminal voltage (U) which is briefly applied in the stationary phase is determined from the current difference (dI) between the resulting current (I-) and the pure coil current (I+).

3. Method according to either of the two preceding claims, **characterized in that** the measurement current (I) with alternating polarities is passed to the commutator (25) with the temperature-dependent conductor (26) which is connected in parallel with the said commutator in a polarity-dependent manner.

4. Method according to one of the three preceding claims, **characterized in that** a series circuit comprising the temperature-dependent conductor (26) and the crystal diode (27) is connected in parallel with the commutator (25) and the polarity of the measurement current (I; I+/I-) is reversed.

5. Method according to one of the four preceding claims, **characterized in that** the measurement current (I) is determined from its voltage drop across a short-circuit protection resistor (33) for the motor current (i).

6. Method according to Claim 1, **characterized in that** the polarity of the motor and the measurement currents (i; I) is reversed by means of a two-pole changeover relay (28) when the currents (i; I) are turned off.

7. Method according to the preceding claim, **characterized in that** a switching transistor (31) which is connected in series with the relay switching contacts is actuated earlier than the changeover relay (28).

## Revendications

1. Procédé de détermination de la température de fonctionnement (T) d'un moteur, notamment d'un moteur servant à l'actionnement d'un élément fonctionnel tel qu'un frein de stationnement (11) électromotorisé dans un véhicule, en alimentant le moteur jusqu'à augmenter son courant de moteur (i) à un courant de déconnexion (imax) prédéfini en fonction d'un couple de charge (Mmax) souhaité au niveau du rotor (12) et pouvant être modifié en fonction de la température de fonctionnement, la température de fonctionnement (T) d'un moteur à courant continu de commutateur (13) étant déterminée à l'arrêt de son rotor (12) pendant une phase d'arrêt du moteur, à partir d'un courant de mesure (I) court traversant un conducteur (26) dépendant de la température et connecté en parallèle au niveau du commutateur (25) du moteur de ses bobines de rotor (24), ce pour quoi une tension de fonctionnement du moteur (U) est appliquée au moteur momentanément à l'arrêt de façon si courte qu'il ne peut se mettre en mouvement.

2. Procédé selon la revendication précédente, **caractérisé en ce que** le courant de mesure (I) est mesuré pendant le positionnement du commutateur dans cette phase d'arrêt en alternance soit via les bobines de rotor (24) incluant le conducteur (26) dépendant de la température connecté en parallèle à elles comme courant résultant (I-) soit seulement via les bobines (24) comme courant de bobine pur (I+) et que la valeur de résistance (R) actuelle dépendant de la température du conducteur (26) est déterminée pour la tension de serrage du moteur (U) connecté pendant un temps court pendant la phase d'arrêt, à partir de la différence de courant (dI) détectée entre le courant résultant (I-) et le courant de bobine pur (I+).

3. Procédé selon l'une quelconque des deux revendications précédentes, **caractérisé en ce que** le courant de mesure (I) est donné avec des polarités alternant sur le commutateur (25) auxquelles on ajoute le conducteur (26) dépendant de la température, connecté en parallèle et dépendant de la polarité.

4. Procédé selon l'une quelconque des trois revendications précédentes, **caractérisé en ce qu'**un circuit en série composé du conducteur (26) dépendant de la température et du conducteur de redressement (27) est branché en parallèle du commutateur (25) et que les pôles du courant de mesure (I ; I+/I-) sont inversés.

5. Procédé selon l'une quelconque des quatre revendications précédentes, **caractérisé en ce que** le courant de mesure (I) est déterminé à partir de ses chutes de tension par le biais d'une résistance de protection contre les courts-circuits (33) prévue pour le courant de moteur (i).

6. Procédé selon la revendication 1, **caractérisé en ce qu'**une inversion de polarité du courant de moteur et de mesure (i ; I) est réalisée lorsque les courants (i ; I) sont déconnectés, par le biais d'un relais de commutation (28) bipolaire.

7. Procédé selon la revendication précédente, **caractérisé en ce qu'**un transistor de connexion (31) placé en série avec les contacts de connexion de relais est commandé avant le relais de commutation (28).
